# EUROPEAN PATENT APPLICATION

(11) **EP 1 273 798 A1**
(43) Date of publication of application: **08.01.2003**
(21) Application number: 02077290.1
(22) Date of filing: 11.06.2002
(51) Int. Cl.: F03D 3/06, F03D 7/06

(54) **Vertical axis wind turbine**

(30) Priority: 02.07.2001 NL 1018436
(71) Applicant: Buis, Gerrit Pieter, 1432 CM Aalsmeer (NL)
(72) Inventor: Buis, G.P., 1432 CM Aalsmeer (NL); Masigui, José Luis Ngale, Tenerife (ES)
(74) Representative: Dorna, Peter

(57) **Abstract**

The invention relates to a windmill comprising a support which is rotatable about an at least substantially vertical axis of rotation, and wings supported by said support. Said wings are pivotable with respect to the support and independently relative to each other about pivot axes extending at least substantially parallel to said axis of rotation. Stops are provided for limiting the pivoting of said wings with respect to the support. Each wing is freely pivotable about a respective pivot axis located near one end of said wing, whilst the pivoting of the wing is limited by a single stop, with respect to which the wing is freely movable.

## Description

The invention relates to a windmill comprising a support which is rotatable about an at least substantially vertical axis of rotation, and wings supported by said support, which wings are pivotable with respect to the support and independently relative to each other about pivot axes extending at least substantially parallel to said axis of rotation, whilst stops are provided for limiting the pivoting movement of said wings with respect to the support.

Such a windmill is known from German patent application no 2718608. Each wing of said known windmill is pivotable about a pivot axis lying between the ends of the wing, whilst one end of the wing is provided with a stop positioned in a groove formed in the support and extending around the pivot axis of the wing in question, as a result of which only a limited pivoting movement of the wing defined by the length of the groove is possible. The construction is thereby such that the wings moving "against the direction of the wind" form a closed shell surface. A drawback of this construction is the fact that the wind load that acts on the closed shell surface places a heavy load on the support of the mill.

According to the invention, each wing is freely pivotable about a respective pivot axis located near one end of said wing, whilst the pivoting movement of the wing is limited by a single stop, with respect to which the wing is freely movable.

When using the construction according to the invention, the wings that move against the direction of the wind during operation can freely adjust themselves substantially parallel to the direction of the wind, so that the wind load that is exerted on the wings moving against the direction of the wind will be small.

In an efficient embodiment, the stops that co-operate with the wings are adjustable, so that the windmill can be adjusted to the prevailing wind force in a simple manner.

The invention will be explained in more detail hereinafter by means of possible embodiments of a windmill according to the invention which is schematically illustrated in the accompanying Figures.

Figure 1 is a schematic view of a windmill according to the invention.

Figure 2 is a schematic top plan view of a windmill as shown in Figure 1, showing two different positions a and b thereof.

Figure 3 is a schematic, sectional view of a fixed shaft and a hollow shaft, which is rotatable about said fixed shaft, of the windmill according to the invention.

Figure 4 is a schematic top plan view of an adjustable stop and a wing associated therewith.

Figure 5 is a schematic side elevation of a mechanism for adjusting the stop.

Figure 6 is a schematic bottom plan view of Figure 5.

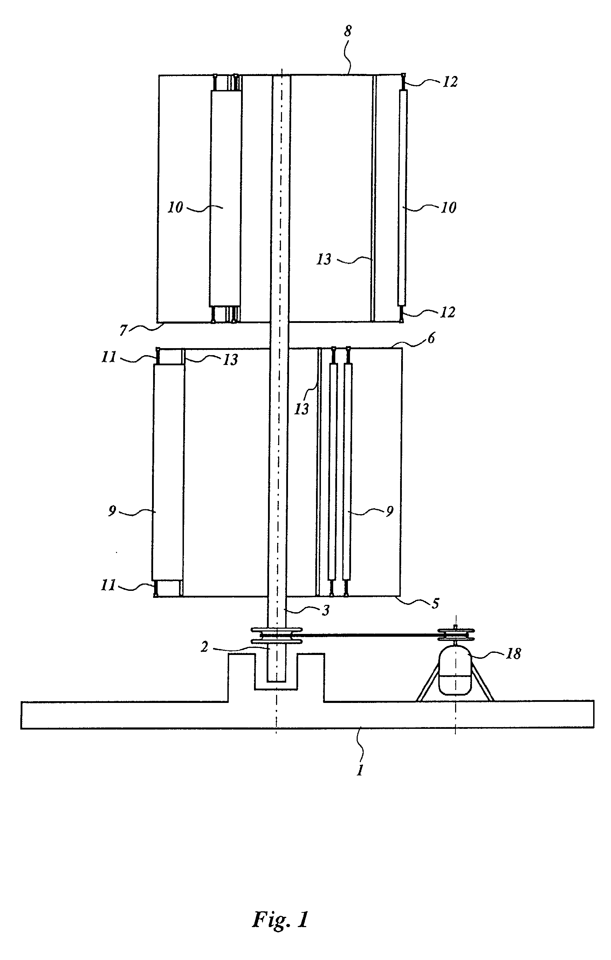

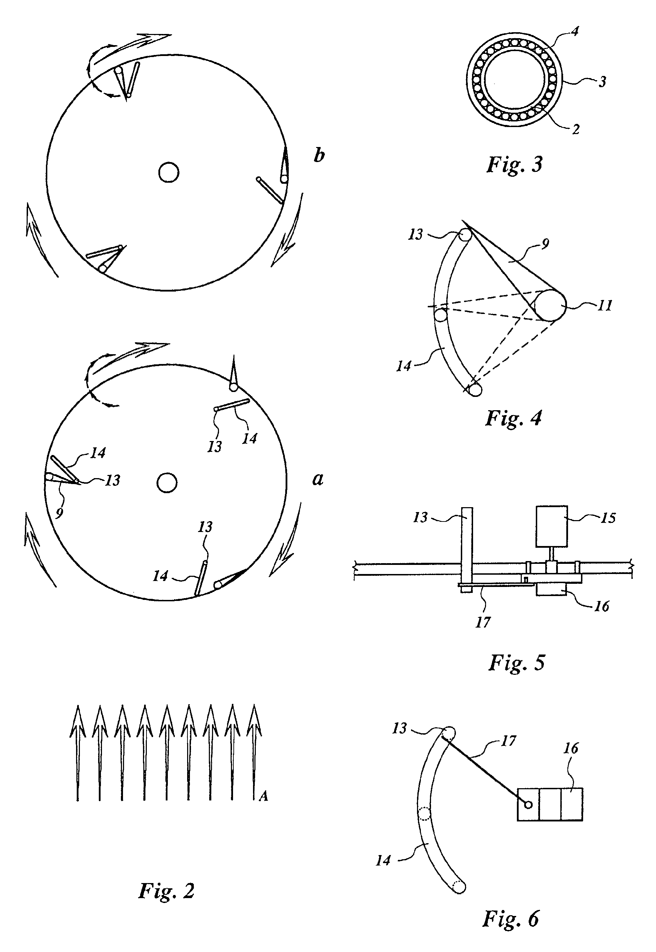

As is apparent in particular from Figures 1 and 3, the windmill according to the invention comprises a vertically extending fixed shaft 2 disposed on a foundation 1. A hollow shaft 3 is freely rotatably mounted on the vertical, fixed shaft 2 by means of bearings 4, and means (not shown) are provided for preventing the shaft 3 from moving in vertical direction with respect to the shaft 2.

Two sets of plates 5, 6 and 7, 8, respectively, extending perpendicularly to the longitudinal direction of the shaft 3 are mounted on said shaft 3, which plates form supports for the wings 9 and 10, respectively, that are arranged between said pairs of plates 5, 6 and 7, 8, respectively. Said wings 9 and 10 are freely pivotably journalled in the plates 5, 6 and 7, 8, respectively, by means of studs 11 and 12, respectively, fixed to the ends of the wings, whose central axes extend parallel to the central axis of the rotatable shaft 3. The pivot axes of the wings 9 and 10, respectively, formed by the studs 11 and 12, respectively, are located near the peripheries of the plates 5-8, as will be apparent in particular from Figure 2.

In the embodiment that is shown in the Figures, three wings 9 and 10, respectively, are arranged at a regular angular distance apart between each set of plates 5, 6 and 7, 8, respectively. Seen in top plan view, the pivot axes of the wings 10 lie centrally between the pivot axes of the wings 9. This arrangement contributes to the shaft 3 being driven in an even manner.

For each wing, an elongated bar-shaped stop 13 extending parallel to the shaft 3 is arranged between the plates 5, 6 and 7, 8, respectively. Preferably, said stop 13 is adjustable, as is shown for three positions in Figure 4, whereby said stop 13 is preferably movable in a path 14 extending concentrically around the pivot axes formed by the studs 11 or 12, respectively, of the respective wing 9 or 10, in such a manner that the stop 13 will co-operate with the free longitudinal edge of the respective wing 9 or 10.

The adjustment of the stop 13 may take place by means of a servo motor 15 mounted on a plate 5 or 7, for example, which is capable of pivoting a carrier 17 which engages the stop 13 via a transmission mechanism 16 (Figures 5, 6).

Assuming that the wind blows from the direction indicated by the arrow A in Figure 2, and that the mill has started to rotate in the direction indicated by the arrow B under the influence of the force of the wind, a wing 9, for example, which moves "with the wind", such as the left-hand wing 9 in Figure 2a, will adjust itself approximately transversely to the direction of the wind in a position limited against further pivoting movement by the stop 13 and thus exert a driving force. Wings that move "against the direction of the wind", such as the wings that are shown in the right-hand part of Figure 2b, will adjust themselves parallel to the direction of the wind by pivoting about the respective pivot axes formed by the studs 11 or 12, so that their braking effect will be practically zero.

As appears from a comparison between Figure 2a and Figure 2b, the wing, which initially extends transversely to the direction of the wind, will gradually take up of a position approximately parallel to the direction of the wind upon further pivoting from the position that is shown in Figure 2a to the position that is shown in Figure 2b, in which initially the free end of the wing abutting against the stop 13 is positioned in front of the axis of rotation 11 or 12 of the wing in question, seen in the direction of the wind indicated by the arrow A. Upon slightly further pivoting from the position that is shown in Figure 2b, the wing that is shown at the top in Figure 2b will pivot about 180° about the studs 11 or 12 under the influence of the wind, taking up a position in which it extends approximately parallel to the direction of the wind, in which the pivot of the wing in question will be positioned in front of the free end of the wing, seen in the direction of the wind.

Up to a particular wind force, the stop 13 may be positioned such that the wings extend perpendicularly to the direction of the wind, at least along part of the circular path travelled by the wing, as is shown in Figure 2a for the wing located furthest to the left. The stop 13 that co-operates with the free end of the wing is located on the connecting line between the axis of rotation of the supports 5-8 and the pivot axis 11, 12 of the associated wing 9, 10. When the wind force increases, however, the force that is thus exerted on the wing and, via the wing, on the other parts of the windmill, may become too great. By means of a suitable adjustment of the stop 13 along the guide 14 it can be effected that the wing in question does not extend perpendicularly to the direction of the wind if, seen in Figure 2a, its pivot axis occupies the position that is shown for the wing located furthest to the left in Figure 2a, but includes an angle deviating from 90° therewith. It will be apparent that the force that is exerted on the wing and, via the wing, on the other parts of the windmill in that case will be smaller than in the situation in which the wing that is located furthest to the left in Figure 2a occupies the position that is shown therein. If the stop 13 is moved to a position in which the spacing between the axis of rotation of the supports 5-8 and the stop 13 is approximately equal to the spacing between said axis of rotation and the pivot 11, 12 of the associated wing 9, 10, the wings will generate practically no driving force.

The adjusting mechanism 15-17 is preferably so constructed that the carrier 17 is urged, by means of a spring (not shown) incorporated in the adjusting mechanism 15-17, to a position in which the stop member 13 is urged towards the end of the guide 14 located near the outer periphery of the support 5, so that the wings extend at least substantially parallel to the direction of the wind and the wind will not be able to exert any significant driving force on the mill any more.

The windmill may be used for driving purposes, for example for driving a dynamo 18 as shown in Figure 1. Also other driving possibilities are conceivable, of course. Thus, the windmill might be mounted on a ship, for example, for driving a propelling screw.

Furthermore, the wings 9 are very suitable for being provided with information, for example in the form of publicity. It would be possible to use the windmill for this purpose alone.

It stands to reason that additions and variations to the embodiment as described above are possible within the spirit and scope of the invention. Thus, only one group of wings or more than two groups of wings may be provided instead of two groups of wings 9 and 10 arranged above each other. Furthermore, each group of wings may comprise a number of wings different from the three wings that are used in the illustrated embodiment.

In order to prevent undesirable oscillating movement of the wings, damping means or braking means may be connected to the wings.

## Claims

1. A windmill comprising a support which is rotatable about an at least substantially vertical axis of rotation, and wings supported by said support, which wings are pivotable with respect to the support and independently relative to each other about pivot axes extending at least substantially parallel to said axis of rotation, whilst stops are provided for limiting the pivoting movement of said wings with respect to the support, **characterized in that** each wing is freely pivotable about a respective pivot axis located near one end of said wing, whilst the pivoting of the wing is limited by a single stop, with respect to which the wing is freely movable.

2. A windmill according to claim 1, **characterized in that** said stops are adjustable.

3. A windmill according to claim 2, **characterized in that** a stop co-operates with the end of the wing remote from the pivot axis of said wing, which stop is adjustable between a position in which said stop is spaced from the axis of rotation of said support by approximately the same distance as the pivot axis of the wing in question, and a position in which said stop is located at least substantially on the connecting line between said axis of rotation and the pivot axis of the wing.

4. A windmill according to any one of the preceding claims, **characterized in that** said windmill comprises a group of wings, wherein the pivot axes of said wings are spaced a regular angular distance apart.

5. A windmill according to claim 4, **characterized in that** said windmill comprises two groups of wings arranged above each other, said groups being arranged in such a manner that the pivot axes of the wings of one group are located approximately centrally between the pivots of the wings of the other group, seen in top plan view.

6. A windmill according to any one of the preceding claims, **characterized in that** said windmill is coupled to an element that is to be driven.

7. A windmill according to any one of the preceding claims, **characterized in that** information is present on said wings.
